# EUROPÄISCHE PATENTSCHRIFT

(11) **EP 0 976 957 B1**
(45) Veröffentlichungstag und Bekanntmachung des Hinweises auf die Patenterteilung: **03.04.2002**
(21) Anmeldenummer: 99111113.9
(22) Anmeldetag: 08.06.1999
(51) Int. Cl.: F16K 31/06, F16K 31/40, H01F 7/13, H01F 7/16

(54) **Servo-Druckregler mit gestuftem Magnetanker**
Servo pressure controller with stepped magnet armature
Servorégulateur de pression avec armature d'aimant étagée

(30) Priorität: 29.07.1998 DE 19834078
(43) Veröffentlichungstag der Anmeldung: 02.02.2000
(73) Patentinhaber: KARL DUNGS GMBH & CO., D-73660 Urbach (DE)
(72) Erfinder: Moses, Johann, 73614 Schorndorf (DE)
(74) Vertreter: KOHLER SCHMID + PARTNER

(56) Entgegenhaltungen:
- EP-A- 0 039 000
- DE-C- 847 465
- FR-A- 867 141
- FR-A- 2 687 502
- GB-A- 2 044 541
- GB-A- 2 233 741
- US-A- 4 216 454
- US-A- 5 010 312
- US-A- 5 268 662
- PATENT ABSTRACTS OF JAPAN vol. 13, no. 493 (E-842), 8. November 1989 (1989-11-08) -& JP 01 198005 A (NIPPON DENSO CO LTD), 9. August 1989 (1989-08-09)

## Beschreibung

Die Erfindung betrifft einen Druckregler mit einem Magnetantrieb für ein Stellelement, wobei der Magnetantrieb eine Magnetspule und einen axial verschiebbaren, das Stellelement kraftbeaufschlagenden rotationssymmetrischen Magnetanker umfaßt, der zumindest auf einem Teil seines Verschiebewegs von einer innerhalb der Magnetspule angeordneten Hülse umgeben ist und im Magnetfeld der erregten Magnetspule in Anzugsrichtung bewegt wird.

Ein derartiger Druckregler ist beispielsweise durch die EP 0 039 000 A1 bekanntgeworden.

Bei diesem bekannten Druckregler wird ein Steuerdruck für ein membrangesteuertes Gasventil, d.h. für einen sogenannten Servodruckregler, erzeugt. Dazu sind im hohlzylindrischen Innenraum einer Magnetspule ein fester Magnetkern und ein axial verschiebbarer kreiszylindrischer Magnetanker vorgesehen, der über eine ihn tragende Stange und eine Druckfeder auf ein Stellelement in Form einer Reglermembran drückt. Der Federkraft entgegen wirkt unterhalb der Reglermembran der Auslaßdruck eines vom Druckregler gesteuerten Häuptgasventils. Durch verstellbare Anschläge für den Magnetanker in Form einer die Stange umgebenden und zu deren Führung dienenden Einstellschraube sowie einer auf dem Stangenende verstellbaren Einstellmutter lassen sich der Mindestgasdurchsatz (Kleinstdruck) sowie der maximale Gasdurchsatz (Höchstdruck) durch das geregelte Hauptgasventil einstellen.

Bei diesem bekannten Druckregler ist innerhalb der Magnetspule ein die Stange berührungsfrei umgebender fester Magnetkern vorgesehen, dessen dem Magnetanker zugewandte Stirnseite bei erregter Magnetspule die Polfläche für den Magnetanker in Anzugsrichtung bildet. Da die auf den Magnetanker wirkende Magnetkraft umso größer ist, je näher der Magnetanker dieser Polfläche ist, besteht die Gefahr, daß der Magnetanker bei ausreichender Nähe zur Polfläche unkontrolliert in Anlage an die Polfläche schnappt. Das heißt, die auf den Magnetanker wirkende Magnetkraft steigt mit zunehmendem Verschiebeweg des Magnetankers in Anzugsrichtung an (steigende Magnetkraftkennlinie). Außerdem ist der Magnetanker vergleichsweise groß und schwer, wodurch sich einerseits die Einstellwerte bei anderer Einbauposition verändern und sich andererseits die Hysterese der Kennlinie bei waagerechtem Einbau erheblich erhöht.

Auch aus der DE 196. 32 552 C1 ist ein modulierender Druckregler bekannt, bei dem der rotationssymmetrische Magnetanker innerhalb einer nichtmagnetischen Ankerhülse axial verschiebbar geführt ist. Die Einstellung einer gewünschten Magnetkraftkennlinie wird hier durch Verschiebung einer aus verschiedenen Werkstoffen aufgebauten mehrteiligen Magnetschlußhülse relativ zur Magnetspule erreicht.

Aus der JP 01 19 8005 A ist ein Elektromagnet mit einem Magnetantrieb für ein Stellelement bekannt. Dabei umfaßt der Magnetantrieb eine Magnetspule und einen axial verschiebbaren, das Stellelement kraftbeaufschlagenden rotationssymmetrischen Magnetanker, der zumindest auf einem Teil seinem Verschiebewegs von einer innerhalb der Magnetspule angeordneten Hülse umgeben ist, und im Magnetfeld der erregten Magnetspule in Anzugsrichtung bewegt wird. Ausserhalb der Magnetspule ist eine Zwischenplatte vorgesehen, wobei sich entlang des Verschiebewegs des Magnetankers in Anzugsrichtung der Ringspalt zwischen Magnetanker und Zwischenplatte verringert. D.h., mit zunehmender Verschiebung des Magnetankers in Anzugsrichtung nimmt die auf den Magnetanker wirkende Magnetkraft der erregten Magnetspule zu.

Die US 4,216,454 A betrifft ebenfalls einen Elektromagneten. Dabei bewirkt auch hier eine Verschiebung des Magnetankers in Anzugsrichtung, dass sich der Abstand zwischen der Polfläche und dem Magnetanker verringert. Daher nimmt mit zunehmender Anziehung des Magnetankers in Anzugsrichtung die auf ihn wirkende Magnetkraft zu.

Gleiches gilt für den aus der FR 867 141 A bekannten Elektromagneten, bei dem eine Magnetspule den Magnetanker in Anzugsrichtung anzieht. Dabei nimmt auch hier wegen der Stufung von Magnetanker und Hülse mit zunehmender Verschiebung des Magnetankers in Anzugsrichtung die auf ihn wirkende Magnetkraft zu.

Der Erfindung liegt demgegenüber die Aufgabe zugrunde, bei einem Druckregler der eingangs genannten Art zu verhindern, daß sein Magnetanker in Anzugsrichtung an die Polfläche schnappt.

Diese Aufgabe wird erfindungsgemäß dadurch gelöst, daß die Hülse aus magnetischem Material gebildet ist und daß sich entlang des Verschiebewegs des Magnetankers in Anzugsrichtung der Ringspalt zwischen Hülse und Magnetanker vergrößert.

Mit dem sich während der Anzugsbewegung vergrößernden Ringspalt vergrößert sich entsprechend auch der Widerstand des Magnetkreises im Bereich zwischen Magnetanker und Hülse, d.h., die auf den Magnetanker wirkende Magnetkraft der erregten Magnetspule nimmt mit zunehmender Anzugsverschiebung des Magnetankers ab. Dies führt zu einer fallenden Magnetkraftkennlinie über einen relativ großen Verschiebeweg des Magnetankers. Dadurch ist ein stabiler, einstellbarer Arbeitsbereich möglich, ohne daß der Magnetanker zum Schnappen an die Polfläche neigt. Eine Gegenfeder zur Stabilisierung ist nicht mehr erforderlich, wodurch wesentlich weniger Probleme mit Fertigungstoleranzen auftreten.

Bei besonders bevorzugten Ausführungsformen der Erfindung erweitert sich der Außenumfang des Magnetankers in Anzugsrichtung. Dazu kann beispielsweise der Außenumfang in Anzugsrichtung radial nach außen gestuft sein und/oder sich in Anzugsrichtung auf mindestens einem axialen Teilabschnitt konisch erweitern. Ein solcher Magnetanker hat im Vergleich zu bekannten zylinderförmigen Magnetankern bei gleichem Außendurchmesser zudem ein geringeres Gewicht, so daß Lager- und Reibungskräfte verringert werden können. Schließlich läßt sich durch einen leichteren Magnetanker die bei waagerechtem Einbau auftretende Reibung verringern.

In einer weiteren besonders bevorzugten Ausführungsform erweitert sich der Innendurchmesser der Hülse in Anzugsrichtung. Dazu kann beispielsweise der Innenumfang in Anzugsrichtung radial nach außen gestuft sein und/oder sich in Anzugsrichtung auf mindestens einem axialen Teilabschnitt konisch erweitern. Dabei kann der Außenumfang des in die Hülse hineinragenden Magnetankers zylinderförmig sein oder, was bevorzugt ist, sich ebenfalls in Anzugsrichtung erweitern.

In einer anderen vorteilhaften Ausführungsform sind zwei Anschläge für den Magnetanker vorgesehen, die dessen Verschiebung in und entgegen der Anzugsrichtung begrenzen und damit den kleinsten und größten Solldruck im Druckregler definieren.

Bei einer vorteilhaften Ausführungsform ist der Magnetanker auf einer Führung axial verschiebbar geführt.

Während bei dem aus der EP 0 039 000 A1 bekannten Druckregler der Magnetanker und die mit ihm fest verbundene Stange gemeinsam bewegt werden, sind erfindungsgemäß durch Verzicht auf die mitbewegte Stange das zu bewegende Gewicht und damit Lager- und Reibungskräfte reduziert. Die Lagerstelle des Magnetankers läßt sich gut kapseln und ist damit unempfindlich gegen Verschmutzung von außen.

Bei bevorzugten Weiterbildungen dieser Ausführungsform ist der Magnetanker auf einer von außen axial verstellbaren Führungsstange geführt, welche einen Anschlag für den Magnetanker in Anzugsrichtung aufweist. Dazu kann die Führungsstange zum Beispiel einen Gewindeabschnitt aufweisen, so daß ein Benutzer den Anschlag durch Verdrehen der Führungsstange leicht von außen axial verstellen kann.

Wenn zusätzlich die Führungsstange in einer von außen axial verstellbaren Führungshülse geführt ist, welche einen Anschlag für den Magnetanker entgegen der Anzugsrichtung aufweist, lassen sich beide Anschläge - und damit Kleinst- und Höchstdruck des Druckreglers - unabhängig voneinander jeweils durch Verdrehen der Führungsstange und der Führungshülse einstellen.

Vorzugsweise erfolgt die Kraftbeaufschlagung des Stellelement mittels einer Druckfeder, die zwischen Magnetanker und Stellelement abgestützt ist.

Die Erfindung betrifft auch einen Servo-Druckregler mit einem Druckregler, wie er oben beschrieben ist. Der erfindungsgemäße Servo-Druckregler läßt sich elektrisch (proportional zu einem Strom) auf den gewünschten Druckwert einstellen, wobei die elektrische Einstellung den Druck nur zwischen einem mechanisch vorgegebenen Maximal- und Minimalwert beeinflußt. Der Servo-Druckregler ist vergleichsweise klein gebaut, seine Magnetkraftkennlinie hat wenig Hysterese und ist auf eine gewünschte Kennlinie einstellbar.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: in einem Längsschnitt den erfindungsgemäßen Druckregler mit einem Magnetanker, der einen gestuften, zylinderförmigen Außenumfang aufweist; und
- Fig. 2: in einer Detailansicht einen Magnetanker mit einem gestuften und konischen Außenumfang.

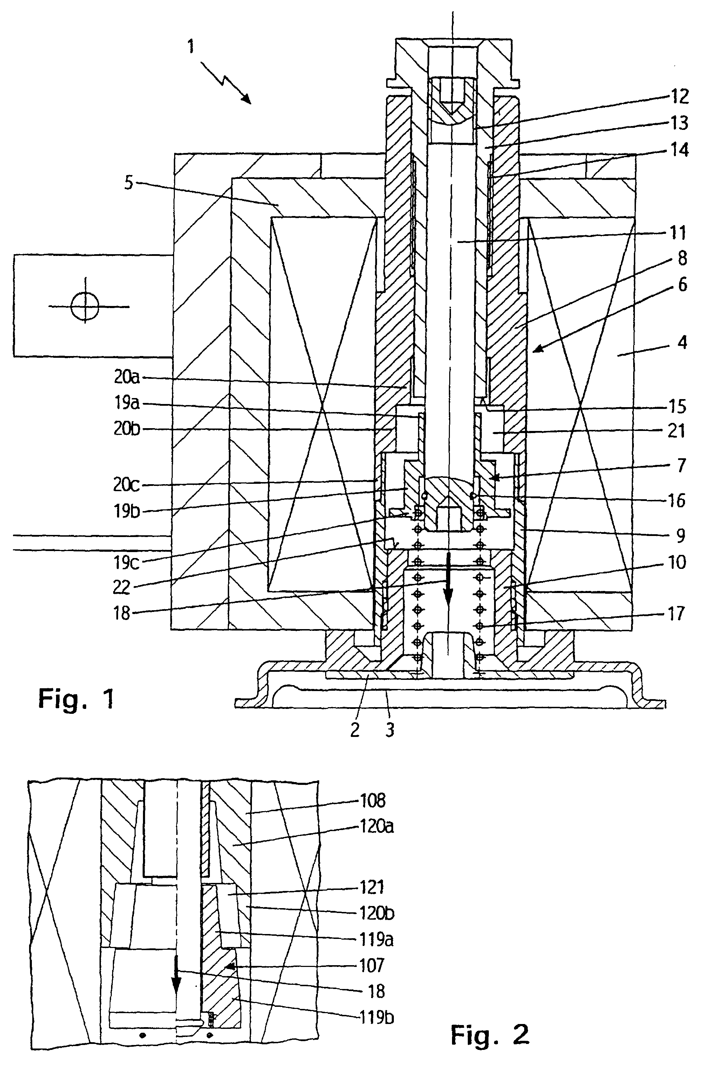

Bei dem in Fig. 1 insgesamt mit **1** bezeichneten Druckregler handelt es sich um einen Servo-Druckregler, dessen als Membranteller **2** ausgebildetes Stellelement mittels eines Magnetantriebs den unterhalb einer Reglermembran **3** herrschenden Steuerdruck zwischen einem Kleinstdruck und einem Höchstdruck steuert.

Der Magnetantrieb umfaßt eine Magnetspule **4**, ein Spulengehäuse **5**, eine im hohlzylindrischen Innenraum der Magnetspule **4** angeordnete Magnetschlußhülse **6** sowie einen rotationssymmetrischen Magnetanker **7**. Die Magnetschlußhülse 6 ist dreiteilig durch eine obere Hülse **8** aus magnetischem Material, eine mittlere Hülse **9** aus nichtmagnetischem Material und eine untere Hülse **10** aus magnetischem Material gebildet.

Der Magnetanker 7 ist axial frei verschiebbar zwischen zwei Endstellungen auf dem unteren Ende einer Führungsstange **11** geführt, deren oberes Ende über ein Gewinde **12** in eine Führungshülse **13** eingeschraubt ist. Diese Führungshülse 13 ist ihrerseits über ein Gewinde **14** in die obere Hülse 8 eingeschraubt, wobei die Unterkante **15** der Führungshülse 13 die obere Endstellung des Magnetankers **7** definiert. Die untere Endstellung ist durch einen an der Führungsstange 11 vorgesehenen Ringvorsprung **16** definiert. Über die beiden Gewinde 12, 14 können Führungsstange 11 und Führungshülse 13 unabhängig voneinander von außen jeweils axial verstellt und damit die beiden Endstellungen des Magnetankers 3 individuell eingestellt werden.

Über eine Druckfeder **17**, die unmittelbar am Magnetanker 7 einerseits und am Membranteller 2 andererseits abgestützt ist, ist die Reglermembran 3 nach unten kraftbeaufschlagt. Bei Erregung der Magnetspule 4 entstehen magnetische Kraftlinien, die den Magnetanker 7 in Anzugsrichtung **18** nach unten ziehen. Dadurch wird die auf den Membranteller 2 wirkende Druckkraft und damit auch der unter der Reglermembran 3 herrschende Steuerdruck erhöht. Der Magnetanker 7 wirkt so direkt auf die Druckfeder 17, auf die proportional zum Spulenstrom eine Regelkraft übertragen wird, die im ausgeregelten Zustand im Gleichgewicht zur Druckkraft unter der Regelmembran 3 steht.

Der Außenumfang des Magnetankers 7 ist in Anzugsrichtung 18 zweifach radial nach außen gestuft und so in drei zylinderförmige Axialabschnitte mit unterschiedlichen Außendurchmessern unterteilt, nämlich in einen oberen Axialabschnitt **19a** mit kleinerem Außendurchmesser, einen mittleren Axialabschnitt **19b** mit größerem Außendurchmesser und einen unteren Axialabschnitt **19c** mit noch größerem Außendurchmesser. Auch die obere Hülse 8 ist an ihrem unteren Ende, in das der Magnetanker 7 in seiner oberen Endstellung hineinragt, in Anzugsrichtung 18 zweifach radial nach außen gestuft und so in drei zylinderförmige Axialabschnitte mit unterschiedlichem Innendurchmesser unterteilt, nämlich in einen oberen Axialabschnitt **20a** mit kleinerem Innendurchmesser, einen mittleren Axialabschnitt **20b** mit größerem Außendurchmesser und einen unteren Axialabschnitt **20c** mit noch größerem Innendurchmesser. Somit nehmen der Außendurchmesser des Magnetankers 7 und der Innendurchmesser der oberen Hülse 8 jeweils in Anzugsrichtung 18 zu.

Durch den gestuften Magnetanker 7 und die gestufte obere Hülse 8 vergrößert sich bei einer Verschiebung des Magnetankers 7 in Anzugsrichtung 18 der zwischen Magnetanker 7 und oberer Hülse 8 vorhandene Ringspalt **21** und damit auch der Widerstand des Magnetkreises in diesem Bereich. Folglich nimmt die auf den Magnetanker 7 wirkende Magnetkraft der erregten Magnetspule 4 mit zunehmender Verschiebung des Magnetankers 7 in Anzugsrichtung 18 ab. Dies führt zu einer fallenden Magnetkraftkennlinie über einen relativ großen Verschiebeweg des Magnetankers 7, wodurch ein Schnappen des Magnetankers 7 an die Polfläche **22** der unteren Hülse 10 verhindert wird.

In Fig. 2 ist eine andere Variante des Magnetantriebs gezeigt. Im Unterschied zum Ausführungsbeispiel nach Fig. 1 ist der Außen- bzw. Innenumfang der hier vorgesehenen zwei Axialabschnitte **119a, 119b** und **120a, 120b** von Magnetanker **107** und oberer Hülse **108** nicht zylinderförmig, sondern jeweils in Anzugsrichtung 18 erweitert. Dadurch vergrößert sich der Ringspalt **121** zwischen Magnetanker 107 und oberer Hülse 108 entlang des Verschiebewegs des Magnetankers 107 schneller als bei der Ausführungsform nach Fig. 1 und folglich fällt auch die entsprechende Magnetkraftkennlinie mit zunehmender Verschiebung des Magnetankers 107 schneller ab.

## Patentansprüche

1. Druckregler (1) mit einem Magnetantrieb für ein Stellelement (2), wobei der Magnetantrieb eine Magnetspule (4) und einen axial verschiebbaren, das Stellelement kraftbeaufschlagenden rotationssymmetrischen Magnetanker (7; 107) umfaßt, der zumindest auf einem Teil seines Verschiebewegs von einer innerhalb der Magnetspule (4) angeordneten Hülse (8; 108) umgeben ist und im Magnetfeld der erregten Magnetspule (4) in Anzugsrichtung (18) bewegt wird,
**dadurch gekennzeichnet,**
**daß** die Hülse (8; 108) aus magnetischem Material gebildet ist und daß sich entlang des Verschiebewegs des Magnetankers (7; 107) in Anzugsrichtung (18) der Ringspalt (21; 121) zwischen Hülse (8; 108) und Magnetanker (7; 107) vergrößert.

2. Druckregler nach Anspruch 1, **dadurch gekennzeichnet, daß** sich der Außenumfang des Magnetankers (7; 107) in Anzugsrichtung (18) erweitert.

3. Druckregler nach Anspruch 2, **dadurch gekennzeichnet, daß** der Außenumfang des Magnetankers (7; 107) in Anzugsrichtung (18) radial nach außen gestuft ist.

4. Druckregler nach Anspruch 2 oder 3, **dadurch gekennzeichnet, daß** sich der Außenumfang des Magnetankers (107) in Anzugsrichtung (18) auf mindestens einem axialen Teilabschnitt (119a, 119b) konisch erweitert.

5. Druckregler nach einem der vorhergehenden Ansprüche, **dadurch gekennzeichnet, daß** sich der Innendurchmesser der Hülse (8; 108) in Anzugsrichtung (18) erweitert.

6. Druckregler nach Anspruch 5, **dadurch gekennzeichnet, daß** der Innenumfang der Hülse (8; 108) in Anzugsrichtung (18) radial nach außen gestuft ist.

7. Druckregler nach Anspruch 5 oder 6, **dadurch gekennzeichnet, daß** sich der Innenumfang der Hülse (108) in Anzugsrichtung (18) auf mindestens einem axialen Teilabschnitt (120a, 120b) konisch erweitert.

8. Druckregler nach einem der vorhergehenden Ansprüche, **dadurch gekennzeichnet, daß** zwei Anschläge für den Magnetanker (7; 107) vorgesehen sind, die dessen Verschiebung in und entgegen der Anzugsrichtung (18) begrenzen.

9. Druckregler (1) nach einem der vorhergehenden Ansprüche, **dadurch gekennzeichnet, daß** der Magnetanker (7; 107) auf einer Führung (11) axial verschiebbar geführt ist.

10. Druckregler nach Anspruch 9, **dadurch gekennzeichnet, daß** der Magnetanker (7; 107) auf einer von außen axial verstellbaren Führungsstange (11) geführt ist, welche einen Anschlag für den Magnetanker (7; 107) in Anzugsrichtung (18) aufweist.

11. Druckregler nach Anspruch 10, **dadurch gekennzeichnet, daß** die Führungsstange (11) in einer von außen axial verstellbaren Führungshülse (13) geführt ist, welche einen Anschlag für den Magnetanker (7; 107) entgegen der Anzugsrichtung (18) aufweist.

12. Druckregler nach einem der vorhergehenden Ansprüche, **dadurch gekennzeichnet, daß** eine Druckfeder (17) zwischen Magnetanker (7; 107) und Stellelement abgestützt ist.

13. Servo-Druckregler mit einem Druckregler (1) nach einem der vorhergehenden Ansprüche.

## Claims

1. A pressure controller (1) with a magnetic drive for a positioning element (2), the magnetic drive comprising a magnetic coil (4) and an axially displaceable rotationally symmetric magnetic armature (7, 107) which applies force to the positioning element and which is over at least a part of its displacement path enclosed by a sleeve (8, 108) disposed within the magnetic coil (4) and is moved in the direction of attraction (18) in a magnetic field of the energised magnetic coil (4), **characterised in that** the sleeve (8; 108) consists of magnetic material and **in that** along the displacement path of the magnetic armature (7; 107), the annular gap (21; 121) between sleeve (8; 108) and the magnetic armature (7; 107) increases in size in the direction (18) of attraction.

2. A pressure controller according to claim 1, **characterised in that** the outside circumference of the magnetic armature (7; 107) widens in the direction (18) of attraction.

3. A pressure controller according to claim 2, **characterised in that** the outside circumference of the magnetic armature (7; 107) is stepped radially outwardly in the direction (18) of attraction.

4. A pressure controller according to claim 2 or 3, **characterised in that** the outside circumference of the magnetic armature (107) widens conically in the direction (18) of attraction over at least one axial portion (119a, 119b).

5. A pressure controller according to one of the preceding claims, **characterised in that** the inside circumference of the sleeve (8; 108) widens in the direction (18) of attraction.

6. A pressure controller according to claim 5, **characterised in that** the inside circumference of the sleeve (8; 108) is stepped radially outwardly in the direction (18) of attraction.

7. A pressure controller according to claim 5 or 6, **characterised in that** the inside circumference of the sleeve (8) widens conically in the direction 18) of attraction over at least one axial portion (120a, 120b).

8. A pressure controller according to one of the preceding claims, **characterised in that** two abutments are provided for the magnetic armature (7; 107) which limit its displacement in and against the direction (18) of attraction.

9. A pressure controller (1) according to one of the preceding claims, **characterised in that** the magnetic armature (7; 107) is guided for axial displacement on a guide (11).

10. A pressure controller according to claim 9, **characterised in that** the magnetic armature (7; 107) is guided on a guide rod (11) which is axially adjustable from outside and which has an abutment for the magnetic armature (7; 107) in the direction (18) of attraction.

11. A pressure controller according to claim 10, **characterised in that** the guide rod (11) is guided in an outwardly axially adjustable guide sleeve (13) which has an abutment for the magnetic armature (7; 107) against the direction (18) of attraction.

12. A pressure controller according to one of the preceding claims, **characterised in that** a thrust spring (17) is braced between the magnetic armature (7; 107) and the positioning element.

13. A servo pressure controller with a pressure controller (1) according to one of the preceding claims.

## Revendications

1. Régulateur de pression (1) avec un entraînement magnétique pour un élément de réglage (2), l'entraînement magnétique comprenant une bobine magnétique (4) et une armature magnétique (7 ; 107) à symétrie de révolution et à déplacement axial, sollicitant en force l'élément de réglage, ladite armature étant entourée au moins sur une partie de sa course de déplacement par une douille (8 ; 108) agencée à l'intérieur de la bobine magnétique (4) et étant déplacée en direction d'attraction (18) dans le champ magnétique de la bobine magnétique (4) excitée,
**caractérisé en ce que** la douille (8 ; 108) est constituée par un matériau magnétique et **en ce que** l'entrefer annulaire (21 ; 121) entre la douille (8 ; 108) et l'armature magnétique (7 ; 107) s'agrandit le long de la course de déplacement de l'armature magnétique (7 ; 107) en direction d'attraction (18).

2. Régulateur de pression selon la revendication 1, **caractérisé en ce que** la périphérie extérieure de l'armature magnétique (7 ; 107) s'élargit en direction d'attraction (18).

3. Régulateur de pression selon la revendication 2, **caractérisé en ce que** la périphérie extérieure de l'armature magnétique (7 ; 107) est étagée radialement vers l'extérieur en direction d'attraction (18).

4. Régulateur de pression selon l'une ou l'autre des revendications 2 et 3, **caractérisé en ce que** la périphérie extérieure de l'armature magnétique (107) s'élargit en forme conique en direction d'attraction (18) sur au moins un tronçon partiel axial (119a, 119b).

5. Régulateur de pression selon l'une quelconque des revendications précédentes, **caractérisé en ce que** le diamètre intérieur de la douille (8 ; 108) s'élargit en direction d'attraction (18).

6. Régulateur de pression selon la revendication 5, **caractérisé en ce que** la périphérie intérieure de la douille (8 ; 108) est étagée radialement vers l'extérieur en direction d'attraction (18).

7. Régulateur de pression selon l'une ou l'autre des revendications 5 et 6, **caractérisé en ce que** la périphérie intérieure de la douille (108) s'élargit en forme conique en direction d'attraction (18) sur au moins un tronçon partiel axial (120a, 120b).

8. Régulateur de pression selon l'une quelconque des revendications précédentes, **caractérisé en ce qu'**il est prévu deux butées pour l'armature magnétique (7 ; 107) qui limitent son déplacement dans la direction d'attraction (18) et en sens inverse.

9. Régulateur de pression selon l'une quelconque des revendications précédentes, **caractérisé en ce que** l'armature magnétique (7 ; 107) est guidée à déplacement axial sur un guidage (11).

10. Régulateur de pression selon la revendication 9, **caractérisé en ce que** l'armature magnétique (7 ; 107) est guidée sur une tige de guidage (11) axialement réglable depuis l'extérieur, laquelle présente une butée pour l'armature magnétique (7 ; 107) en direction d'attraction (18).

11. Régulateur de pression selon la revendication 10, **caractérisé en ce que** la tige de guidage (11) est guidée dans une douille de guidage (13) axialement réglable depuis l'extérieur, laquelle présente une butée pour l'armature magnétique (7 ; 107) en sens inverse à la direction d'attraction (18).

12. Régulateur de pression selon l'une quelconque des revendications précédentes, **caractérisé en ce qu'**un ressort de compression (17) est soutenu entre l'armature magnétique (7 ; 107) et l'élément de réglage.

13. Servo-régulateur de pression comprenant un régulateur de pression (1) selon l'une quelconque des revendications précédentes.
